Europäisches Patentamt

European Patent Office

Office européen des brevets

(19)

(11) EP 0 934 536 B1

(12) FASCICULE DE BREVET EUROPEEN

(45) Date de publication et mention
de la délivrance du brevet:
04.07.2001 Bulletin 2001/27

(21) Numéro de dépôt: 97909406.7

(22) Date de dépôt: 14.10.1997

(51) Int Cl.⁷: $G01S\ 15/58$, G01S 13/58

(86) Numéro de dépôt international:
PCT/FR97/01833

(87) Numéro de publication internationale:
WO 98/18020 (30.04.1998 Gazette 1998/17)

(54) **PROCEDE DE MESURE DU DECALAGE DOPPLER DANS UN SYSTEME DE DETECTION UTILISANT DES CODES AMBIGUS**

DOPPLERVERSCHIEBUNGSMESSVERFAHREN IN EINEM ERFASSUNGSSYSTEM UNTER VERWENDUNG VON MEHRDEUTIGEN CODES

METHOD FOR MEASURING THE DOPPLER SHIFT IN A SENSOR SYSTEM USING AMBIGUOUS CODES

(84) Etats contractants désignés:
DE ES GB IT

(30) Priorité: 22.10.1996 FR 9612803

(43) Date de publication de la demande:
11.08.1999 Bulletin 1999/32

(73) Titulaire: THOMSON MARCONI SONAR SAS
06903 Sophia Antipolis (FR)

(72) Inventeurs:
• DOISY, Yves, Thomson-CSF SCPI
F-94117 Arcueil Cedex (FR)
• CHALARON, François, Thomson-CSF SCPI
F-94117 Arcueil Cedex (FR)
• DERUAZ, Laurent, Thomson-CSF SCPI
F-94117 Arcueil Cedex (FR)

(74) Mandataire: Desperrier, Jean-Louis et al
Thomson-CSF Propriété Intellectuelle,
13, Avenue du Président Salvador Allende
94117 Arcueil Cédex (FR)

(56) Documents cités:
EP-A- 0 504 702          EP-A- 0 625 715
US-A- 5 077 702

# EP 0 934 536 B1

## Description

La présente invention se rapporte aux procédés de mesure du décalage Doppler dans un système de détection, par exemple un radar ou un sonar, utilisant des codes ambigus (Doppler x temps). Plus précisément, elle concerne les codes d'émissions pour ce type de système de détection qui permettent la mesure fine du décalage Doppler des échos reçus d'une cible en mouvement, avec une précision ajustable indépendamment des paramètres concernant la durée T, la fréquence initiale f(O) et la fréquence finale f(T) de l'impulsion codée selon ce système.

La modulation des impulsions d'un sonar ou d'un radar avec des codes particuliers permettant d'améliorer la précision de la mesure est bien connue et elle est notamment décrite très largement dans l'ouvrage de A.W. RIHACZEK, intitulé "Principles of high resolution radar", publié chez Mc Graw-Hill. On y expose en particulier que les codes d'émission peuvent être classés en deux catégories :

Les codes non ambigus, pour lesquels la fonction d'ambiguïté temps x Doppler présente, autour du maximum, deux directions principales parallèles aux axes temps et Doppler. Il est alors connu que pour de tels codes, avec une amplitude constante (ou peu modulée) pendant la durée du code, la tolérance Doppler est inversement proportionnelle à la durée du code, ce qui ne permet pas de fixer indépendamment la durée d'émission et la tolérance Doppler. Avec les durées d'émission utilisées en technique sonar, de tels codes conduisent à un nombre de copies très importants, de l'ordre de 1000.

Les codes ambigus, pour lesquels la fonction d'ambiguïté temps x Doppler présente une crête sécante en zéro avec les axes temps et Doppler. Cette crête est rigoureusement linéaire dans le cas du code à Modulation de Fréquence Hyperbolique (MFH), qui a la particularité d'être parfaitement tolérant au Doppler. Dans ce cas, la tolérance Doppler est entièrement déterminée par la largeur de bande B du code émis et est en général insuffisante pour la mesure précise du Doppler.

Le code à Modulation de Fréquence Linéaire (MFL) appartient également à la classe des codes ambigus. Cependant, une fois la durée T et la bande B du code fixées, la tolérance Doppler est donnée par, c étant la vitesse du son :

$$2V_3 \approx \frac{1,5\,c}{BT} \qquad (1)$$

Cette tolérance est alors en général trop petite par rapport au besoins et conduit à un surdimensionnement du nombre de copies de réception.

Un autre exemple de code ambigu est décrit dans le brevet EP-A-0 504 702 ou dans le brevet US 5,480,504, délivré le 2 janvier 1996 au nom d'ATLAS Electronics Gmbh. Dans ce code, la fréquence instantanée est une fonction d'une puissance du temps. Cette puissance est donnée par un paramètre qui varie entre 0 et 1 et lorsque ce paramètre est égal à 1, on retombe sur le code à Modulation de Fréquence Linéaire. Dans ce cas-ci, on a besoin d'un très grand nombre de copies de réception et le nombre minimal de copies est sensiblement égal à celui du code MFL.

Pour pallier ces inconvénients, l'invention propose un procédé selon la revendication 1.

D'autres particularités et avantages de l'invention apparaîtront clairement dans la description suivante, présentée à titre d'exemple non limitatif en regard de la figure annexée qui représente un diagramme permettant d'expliciter les paramètres utilisés dans le texte.

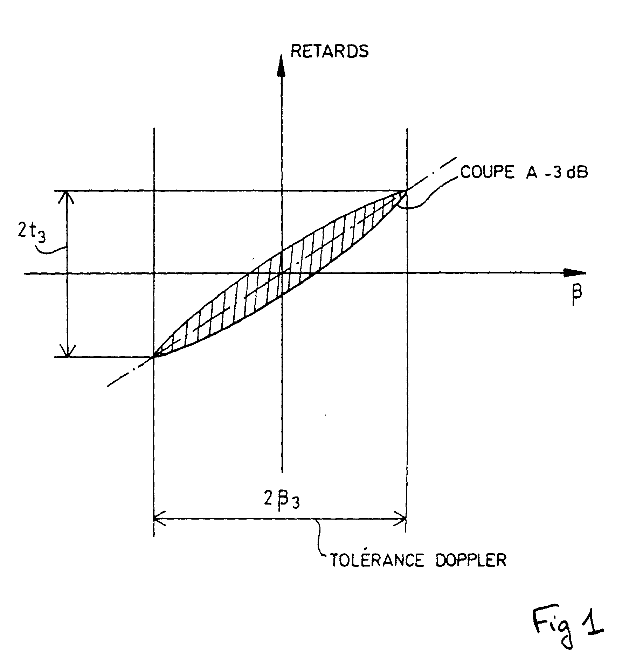

On a représenté sur la figure 1, un paramètre β représentant l'écart Doppler en fonction des retards des échos affectés de cet écart Doppler. Les points représentatifs, choisis en coupant à -3 dB l'ensemble des signaux par rapport à l'intensité maximum de réception, sont répartis dans une ellipse allongée, centrée sur l'origine des axes et inclinée par rapport à ceux-ci.

Le paramètre β est donné par la formule suivante, dans laquelle V est la vitesse de la cible à l'origine des échos :

$$\beta = \frac{2V}{C} = \frac{f\ \text{reçue}}{f\ \text{émise}} - 1 \qquad (2)$$

Dans ces conditions la tolérance Doppler, correspondant à l'étendue en abscisse de cette ellipse, est égale à $2\beta_3 = 2\frac{2V_3}{c}$.

Cette tolérance Doppler correspond à un écart sur les retards égal à $2t_3$.

Pour permettre de diminuer le nombre de copies nécessaires pour traiter correctement les signaux de réception, l'invention propose d'introduire un paramètre supplémentaire dans le code utilisé pour moduler la fréquence des impulsions d'émission. Ce paramètre supplémentaire est choisi pour permettre d'ajuster la tolérance Doppler indépendamment de B et T, et pour obtenir une loi de modulation telle que :

- pour une valeur particulière du paramètre, le code se réduit au code FMH,

- le code présente une crête d'ambiguïté Doppler-distance aussi linéaire que possible, de façon à posséder de bonnes propriétés d'interpolation pour la mesure fine du Doppler et de l'instant d'arrivée de l'écho. Cette interpolation s'effectuera à la réception des échos après l'opération de corrélation. On dispose ainsi, en fonction du rapport signal/bruit des échos, d'une précision de mesure bien meilleure que l'écartement des copies de réception, en Doppler.

Plus particulièrement, l'invention propose d'utiliser la loi de fréquence instantanée suivante, où t est pris sur la durée de l'impulsion T, et où x, qui est positif ou négatif, fixe la tolérance Doppler :

$$f(t) = f(0) \left[ \frac{A}{A + (1+x)\dfrac{t}{T}} \right]^{\frac{1}{1+x}} \qquad (3)$$

Le calcul montre que l'on a alors sensiblement :

$$V_3 = \frac{1{,}74\ c}{|x|BT} \qquad (4)$$

et

$$t_3 \approx T\left( |A| - \frac{x}{2} \right) \frac{3{,}48}{|x|\ BT} \qquad (5)$$

Dans ces conditions, pour déterminer les paramètres x et A qui définissent de façon complète cette loi de fréquence, on se fixe les fréquence f(0), f(T), la tolérance Doppler $V_3$ et la durée de l'impulsion T qui sont déterminées pour des raisons opérationnelles, et l'on obtient alors ces paramètres x et A à l'aide des formules suivantes :

$$x \approx \frac{1{,}74}{B.T \left( \dfrac{2V_3}{c} \right)} \qquad (6)$$

$$A = \frac{(1+x)\left[ f(T)/f(0) \right]^{1+x}}{1 - \left[ f(T)/f(0) \right]^{1+x}} \qquad (7)$$

Dans ces conditions, les précisions sur les mesures de la vitesse radiale et du retard sont données par les formules suivantes :

$$\widehat{\sigma}_V = \frac{V_3}{\sqrt{S/N}} \qquad (8)$$

$$\widehat{\sigma}_T = \frac{t_3}{\sqrt{S/N}} \qquad\qquad (9)$$

Dans ces formules, $S/N$ est le rapport signal/bruit des échos et le calcul est effectué en considérant que le porteur est immobile. Toutefois, les résultats numériques sont encore valables pour les vitesses habituelles de ce porteur.

Dans une application numérique correspondant aux valeurs suivantes des paramètres :

f(0) = 6000 Hz
f(T) = 7000 Hz
T = 4s

$$V_3 = \pm\, C \times \frac{1{,}74}{|x|BT} = 2{,}5 \text{ m/s}$$

la valeur du coefficient x obtenue à partir de ces paramètres est égale à : |x| = 0,261.

On peut alors effectuer l'interpolation entre les copies en utilisant des copies espacées de $\delta V = \frac{2V_3}{3} = 1{,}67$ m/s pour la vitesse et $\delta T = \frac{1}{3B} = 0{,}33$ ms pour le retard. Dans ces conditions, en considérant une cible pour laquelle le rapport signal/bruit des échos de réception est égal à 14 dB, on obtient pour les précisions sur les mesures de la distance radiale et du Doppler les valeurs suivantes :

$$\widehat{\sigma}_T = \frac{93}{5} = 18{,}7 \text{ ms correspondant à } 14 \text{ m}$$

$$\widehat{\sigma}_V = \frac{2{,}5}{5} = 0{,}5 \text{ m}/\text{s}$$

Le nombre ni de copies est donné par la formule :

$$n_i = \frac{2\, V_{MAX}}{\delta V} \qquad\qquad (10)$$

Dans cette formule $V_{MAX}$ est la vitesse maximum que peut atteindre la cible.
Le nombre de copies nécessaires dans l'art antérieur est sensiblement égal à celui nécessaire en utilisant un code MFL. Il est inversement proportionnel à $V_3$ qui est obtenu dans ce cas par la formule :

$$V_3 = \frac{1{,}5\, c}{BT} \qquad\qquad (11)$$

Dans le cas de l'invention, utilisation d'un code pseudo-MFH, ce nombre de copies est proportionnel à $V_3$ qui est lui-même donné par la formule :

$$V_3 = \frac{1{,}74}{0{,}261\, BT} \times C \qquad\qquad (12)$$

Le rapport de ces deux valeurs de $V_3$ donne donc le rapport du nombre de copies nécessaires entre l'art antérieur et l'invention. On constate que dans le cas de l'exemple numérique décrit plus haut l'invention permet d'utiliser dix fois moins de copies.

**Revendications**

1. Procédé de mesure du décalage Doppler dans un système de détection utilisant des codes ambigus, dans lesquels le signal d'émission est formé d'impulsions de longueur T présentant une fréquence initiale f(O) et une fréquence finale f(T) = f(0) + B, caractérisé en ce que le long de chacune de ces impulsions la fréquence instantanée f(t) varie selon une fonction donnée par la formule

$$f(t) = f(0)\left[\frac{A}{A + (1+x)\frac{t}{T}}\right]^{\frac{1}{1+x}},$$

dans laquelle le paramètre x n'est jamais nul et déterminé en fonction d'une valeur choisie de la tolérance Doppler $V_3$ par la formule

$$x = \frac{1,74}{B.T\left(\frac{V_3}{c}\right)}$$

et le paramètre A par la formule

$$A = \frac{(1+x)\left[f(T) / f(0)\right]^{1+x}}{1 - \left[f(T) / f(0)\right]^{1+x}}.$$

2. Procédé selon la revendication 1, caractérisé en ce que f(O) = 6000 Hz, f(T) = 7000 Hz, T = 4 s et $V_3$ = 2,5 m/s correspondant à x = 0,261.


**Patentansprüche**

1. Verfahren zum Messen der Doppler-Verschiebung in einem Erfassungssystem, das mehrdeutige Codes verwendet, in denen das Sendesignal aus Impulsen der Länge T gebildet ist, die eine Anfangsfrequenz f(0) und eine Endfrequenz f(T) = f(0) + B aufweisen, dadurch gekennzeichnet, daß sich die momentane Frequenz f(t) längs jedes dieser Impulse gemäß einer Funktion ändert, die durch die Formel

$$f(t) = f(0)\left[\frac{A}{A + (1 + x)\frac{t}{T}}\right]^{\frac{1}{1+x}},$$

gegeben ist, worin der Parameter x niemals null ist und in Abhängigkeit von einem gewählten Wert der Doppler-Toleranz $V_3$ durch die Formel

$$x = \frac{1,74}{B \cdot T \frac{V_3}{c}}$$

bestimmt ist und der Parameter A durch die Formel

$$A = \frac{(1 + x)\left(\dfrac{f(T)}{f(0)}\right)^{1+x}}{1 - \left(\dfrac{f(T)}{f(0)}\right)^{1+x}}$$

bestimmt ist.

2. Verfahren nach Anspruch 1, dadurch gekennzeichnet, daß f(0) = 6000 Hz, f(T) = 7000 Hz, T = 4 s und $V_3$ = 2,5 m/s, was x = 0,261 entspricht.

## Claims

1. Method for measuring the Doppler shift in a detection system using ambiguous codes, in which the transmission signal is formed by pulses of length T having an initial frequency f(0) and a final frequency f(T) = f(0) + B, characterized in that along each of these pulses the instantaneous frequency f(t) varies according to a function given by the formula

$$f(t) = f(0)\left[\frac{A}{A + (1 + x)\dfrac{t}{T}}\right]^{\frac{1}{1+x}},$$

in which the parameter x is never zero and is determined as a function of a chosen value of the Doppler tolerance $V_3$ by the formula

$$x = \frac{1.74}{B.T\left(\dfrac{V_3}{c}\right)}$$

and the parameter A by the formula

$$A = \frac{(1 + x)[f(T)/f(0)]^{1+x}}{1 - [f(T)/f(0)]^{1+x}}.$$

2. Method according to Claim 1, characterized in that f(0) = 6000 Hz, f(T) = 7000 Hz, T = 4s and $V_3$ = 2.5 m/s corresponding to x = 0.261.

Fig 1